# FASCICULE DE BREVET EUROPEEN

(11) **EP 1 888 369 B1**
(45) Date de publication et mention de la délivrance du brevet: **09.06.2010**
(21) Numéro de dépôt: 06709383.1
(22) Date de dépôt: 27.02.2006
(51) Int. Cl.: B60N 3/04

(54) **TAPIS DE SOL ACCESSOIRE POUR VEHICULE AUTOMOBILE**
ZUSÄTZLICHE FUSSBODENMATTE FÜR AUTOMOBIL
ACCESSORY FLOOR MAT FOR MOTOR VEHICLE

(30) Priorité: 24.05.2005 FR 0505218
(43) Date de publication de la demande: 20.02.2008
(73) Titulaire: FACAM DISTRIBUTION, 59000 Lille (FR)
(72) Inventeur: MACE DE GASTINES, Christophe, F-59420 Mouvaux (FR)
(74) Mandataire: Hennion, Jean-Claude
(86) Numéro de dépôt international: PCT/FR2006/000436
(87) Numéro de publication internationale: WO 2006/125875

(56) Documents cités:
- EP-A- 0 220 305
- EP-A- 0 834 423
- GB-A- 1 325 203
- US-A- 6 155 629
- PATENT ABSTRACTS OF JAPAN vol. 008, no. 035 (M-276), 15 février 1984 (1984-02-15) & JP 58 191639 A (DAIWA:KK), 8 novembre 1983 (1983-11-08)

## Description

La présente invention concerne un tapis de sol qui est destiné à protéger le plancher d'une automobile ou d'un autre véhicule , de manière accessoire, c'est-à-dire d'un plancher qui est déjà revêtu d'une garniture de protection du type moquette. Elle concerne plus particulièrement un tel tapis qui est constitué d'une couche plastique , fixée éventuellement sous un revêtement extérieur textile et qui comporte , sur sa périphérie, un rebord préformé.

On connaît par le document EP.220.305, un tapis de sol accessoire pour automobile qui montre les caractéristiques du préambule de la revendication 1 et qui comporte, sur toute sa périphérie , un rebord relevé qui s'étend vers l'extérieur et est tourné vers le bas, c'est-à-dire ayant une configuration en forme de U retourné. Ce tapis est dimensionné et configuré de façon à ce que lesdits rebords, dénommés dans le texte bords roulés, viennent en butée contre la périphérie du fond de plancher moquetté dans lequel le tapis est placé, dans le but d'éviter un déplacement dudit tapis. Dans ce document , le tapis est conformé pour venir s'encastrer dans un logement en forme de cuvette, dont le fond est constitué par le plancher proprement dit et dont les montants latéraux, formant la périphérie, sont constitués à gauche par le longeron de la caisse du véhicule et à droite par le tunnel de transmission , s'agissant de l'emplacement du conducteur. Le rebord relevé est destiné à venir s'adapter le plus exactement possible le long de la périphérie du logement , en s'appliquant sur les montants latéraux dudit logement. Ce type de tapis de sol accessoire est obligatoirement spécifique d'un modèle de véhicule automobile donné. En effet, dans le cas où le contour du plancher à protéger n'est pas strictement conforme à la configuration des bords relevés du tapis , il s'ensuit soit un certain jeu qui peut provoquer des déplacements rédhibitoires du tapis à l'occasion des opérations normales de conduite du véhicule soit au contraire une déformation du rebord qui peut être très gênante, particulièrement dans la partie avant du tapis, qui se trouve à proximité des pédales du véhicule.

Dans le document EP.0.834.423, on a proposé un tapis de sol accessoire qui présente également un rebord extérieur sur toute sa périphérie, à l'exception de la partie avant. Ce tapis possède une structure préformée avec une partie plane dont le rebord relevé a une configuration en U retourné avec l'extrémité libre de la branche extérieure du U qui est sensiblement dans le plan de la face inférieure de la partie plane. Selon ce document , cette forme particulière du rebord en U retourné permet une très grande stabilité du tapis sur le fond du plancher et également empêche toute déformation du rebord y compris lorsque l'utilisateur pose le pied sur celui-ci.

Cependant le demandeur est d'avis que la structure des tapis décrits les deux documents EP.220.305 et EP.834.423 n'est pas totalement satisfaisante. Le rebord relevé du tapis du document EP.220.305 peut en particulier constituer une gêne rédhibitoire du fait de sa proximité des pédales d'actionnement du véhicule. La structure de la partie avant du tapis du document EP.834.3423 manque de rigidité notamment lorsque ladite partie avant comporte une découpe longitudinale qui délimite une patte avant latérale devant se positionner sur une partie du logement en déclivité.

L'objet de la présente invention est de proposer un tapis de sol accessoire pour automobile qui pallie les inconvénients, notamment ceux précités, des tapis décrits dans les deux documents EP.220.305 et EP.834.423.

Ce tapis de sol accessoire pour automobile est du type connu par le document EP.834.423 en ce qu'il est constitué d'une couche plastique , fixée éventuellement comme sous-couche sous un revêtement extérieur textile, possédant une structure préformée avec une partie plane et sur toute sa périphérie un rebord relevé ayant une configuration en U retourné.

De manière caractéristique , selon la présente invention, le rebord a une structure différenciée , selon son emplacement, en deux types principaux, dénommés premier et second rebords. Le premier rebord, disposé sur toute la périphérie sauf sur la partie avant , a une hauteur , au-dessus du plan DD' de la face inférieure de la partie plane , ayant une valeur H1 déterminée. De plus l'extrémité libre de la branche extérieure du premier bord est à une distance E dudit plan DD'. Quant au second bord , il est disposé sur la partie avant , et a une hauteur , au-dessus du plan DD' , qui a une valeur H2 inférieure à H1. Enfin l'extrémité libre de la branche du second bord est sensiblement dans le plan DD'.

On retrouve dans le tapis de la présente invention , un premier rebord dont la structure est sensiblement conforme au rebord du document EP.220.305, exception faite de la partie avant du tapis pour laquelle le second rebord a une structure sensiblement conforme à celle qui était prévue dans le document EP.834.423 pour toute la périphérie dudit tapis à l'exception justement de cette partie avant , sachant que selon la présente invention, la hauteur H2 de ce second rebord doit être nécessairement inférieure à la hauteur H1 du premier rebord.

Selon une variante de réalisation , la hauteur du second bord a une valeur H2 qui est inférieure à 0,5 H1, H1 étant la valeur de la hauteur du premier rebord, et est de préférence comprise entre 0,2 et 0,3H1.

Dans une variante de réalisation , la distance E qui s'étend entre le plan DD' et l'extrémité libre de la branche extérieure du premier rebord est de l'ordre de 0,25 à 0,5 H1.

Dans une variante de réalisation , H1 est de l'ordre de 25mm à 30mm.

De manière également caractéristique , le tapis de sol de la présente invention comporte, entre le premier et le second rebords , un rebord d'un troisième type dénommé rebord intermédiaire dont la hauteur décroît de H1 à H2 et pour lequel la distance E décroît jusqu'à une valeur nulle. On a donc un passage progressif du premier au second rebord. Il y a deux rebords intermédiaires qui constituent les zones latérales de transition entre le premier rebord et le second rebord qui se trouve sur la partie avant du tapis. Ces deux rebords intermédiaires peuvent être disposés , latéralement au même niveau, ou décalés l'un par rapport à l'autre.

En pratique ,le fond du logement dans lequel est positionné le tapis présente une portion plane et une portion inclinée qui remontent vers les pédales d'actionnement de l'automobile, ces deux portions planes et inclinées étant délimitées par une zone de discontinuité. Les deux rebords intermédiaires latéraux du tapis de la présente invention sont disposés à des emplacements destinés à être appliqués sur cette zone de discontinuité.

Selon une variante de réalisation , la partie avant comporte une découpe longitudinale qui délimite une patte avant latérale et le second rebord s'étend sur toute la périphérie de ladite partie avant y compris les bords de ladite découpe longitudinale.

La présente invention sera mieux comprise à la lecture de la description qui va être faite d'un exemple préféré de réalisation d'un tapis de sol accessoire pour véhicule automobile comportant un rebord relevé en forme de U retourné sur toute sa périphérie, avec trois types de rebords de structure différente, à savoir un premier rebord et un second rebord , ce dernier étant disposé sur la partie avant du tapis , et entre les premier et second rebords un rebord intermédiaire , illustré par le dessin annexé dans lequel :
La figure 1 est une représentation schématique en plan vue de dessus du tapis,
La figure 2 est une représentation schématique en coupe du premier rebord selon l'axe II-II de la figure 1,
La figure 3 est une représentation schématique en coupe du second rebord selon l'axe III-III de la figure 1 et
La figure 4 est une représentation schématique en vue de côté du rebord intermédiaire faisant la jonction entre le premier et le second rebord.

Le tapis de sol accessoire 1 est destiné à être disposé sous les pieds du conducteur ou du passager d'un véhicule automobile, dans le logement en forme de cuvette dont le fond est constitué par le plancher du véhicule et dont les montants latéraux sont constitués par le longeron de la caisse et par le tunnel de transmission, ledit logement étant déjà revêtu d'une garniture de protection du type moquette.

Le tapis 1 est constitué d'une couche plastique , thermoformable, qui est fixée comme sous-couche sous un revêtement extérieur textile.

Ce tapis présente sur toute sa périphérie un rebord relevé qui présente une forme en U renversé, cette forme en U étant obtenue par une simple opération de thermoformage.

De manière caractéristique , selon l'invention , le rebord en U renversé n'a pas la même structure sur toute la périphérie du tapis 1 mais a une structure différenciée selon son emplacement sur ladite périphérie. Plus précisément, ce rebord est conformé selon deux types principaux de structure qui sont dénommés dans le présent texte sous les appellations premier rebord 2 et second rebord 3.

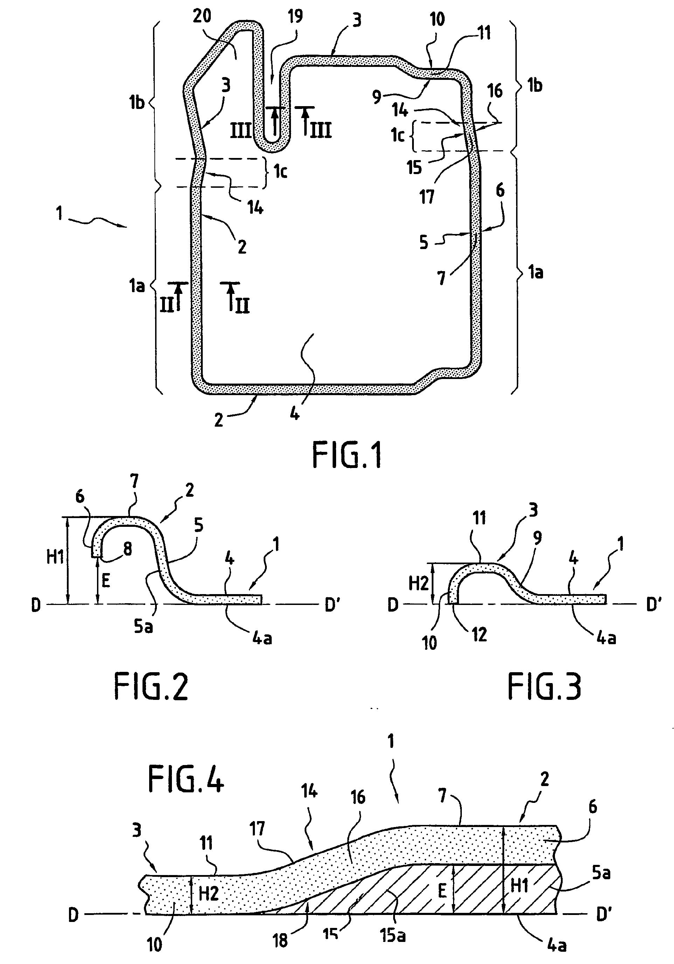

Le premier rebord 2 , tel qu'illustré à la figure 2 , en section transversale, comprend une branche intérieure 5 , une branche extérieure 6 et une portion courbe 7 reliant les deux dites branches intérieure 5 et extérieure 6. Le premier rebord 2 a une hauteur , mesurée depuis le dessus de la portion courbe 7 jusqu'au plan DD' passant par la face inférieure de la partie plane 4 qui a une valeur H1 déterminée. De plus la branche extérieure 6 du premier rebord 2 est en surplomb par rapport au plan DD', l'extrémité libre 8 de ladite branche extérieure 6 étant à une distance E dudit plan DD'.

Le second rebord 3 présente également une branche intérieure 9 et une branche extérieure 10 reliées par une portion courbe 11. La hauteur de ce second rebord 3, par rapport au même plan DD' a une valeur H2 , qui est inférieure à la valeur H1 du premier rebord 2. De plus l'extrémité libre 12 de la branche intérieure 10 est sensiblement dans le plan DD'.

Comme cela apparaît sur la figure 1 , le premier rebord 2 est disposé sur une première partie 1a de la périphérie du tapis 1, cette première partie la correspond, dans le logement dans lequel est destiné à être posé le tapis 1 , à la partie plane du fond de ce logement , qui est situé dans la partie arrière du logement , considérant que l'avant du logement comporte les pédales d'actionnement du véhicule et l'arrière du logement se trouve en-dessous du siège.

Le second rebord 3 se trouve dans la seconde partie qui constitue la partie avant 1b du tapis, venant en complément de la première partie 1a dans laquelle se trouve le premier rebord 2.

La jonction entre le premier et le second rebords 2, 3 est réalisée non pas d'une manière brutale mais de manière progressive et continue grâce à la mise en oeuvre d'un rebord intermédiaire 14.

Sur la figure 4, on a représenté une vue partielle de côté du tapis 1 dans une zone qui comprend de la droite vers la gauche le premier rebord 2 , le rebord intermédiaire 14 et le second rebord 3. Au niveau du premier rebord 2 , cette vue de côté permet de visualiser , en-dessous de la branche extérieure 6, la face externe 5a de la branche intérieure 5. Le rebord intermédiaire 14 comporte lui aussi une branche intérieure 15 et une branche extérieure 16. Sur la figure 4, seule est visible la partie basse de la face externe 15a de la branche intérieure 15, non cachée par la branche extérieure 16. Sur la figure 4, on a représenté schématiquement en pointillés la démarcation entre le rebord intermédiaire 14 et respectivement le premier rebord 2 et le second rebord 3. En réalité cette démarcation n'existe pas, la formation de ce rebord intermédiaire 14 étant réalisée sans discontinuité dans l'installation de fabrication dudit tapis.

Le rebord intermédiaire 14 a une structure qui évolue de manière progressive depuis celle du premier rebord 2 à celle du second rebord 3. Ainsi la hauteur H3 du rebord intermédiaire 14 , prise entre la partie haute de la portion courbe 17 du U et le plan DD' n'est pas constante mais évolue progressivement, de la droite vers la gauche sur la figure 4, depuis la valeur H1 jusqu'à la valeur H2. De plus la distance séparant l'extrémité inférieure 18 de la branche extérieure 16 du rebord intermédiaire 14 et le plan DD' n'est pas constante mais évolue progressivement de la valeur E à une valeur nulle.

Il y a , dans la partie avant 1b, deux zones 1c, attenantes à la première partie 1a, dans lesquelles se trouvent les deux rebords intermédiaires 14.

Il est à noter que les deux zones 1c sont destinées à être disposées ,une fois que le tapis 1 est placé dans son logement , dans la zone de discontinuité entre la partie arrière plane du logement et la partie avant qui remonte vers les pédales. Comme illustré à la figure 1 , ces deux zones 1c peuvent être décalées l'une par rapport à l'autre , dans le sens longitudinal du tapis 1.

Dans l'exemple précis de réalisation qui est illustré à la figure 1 , le tapis 1 comporte une découpe longitudinale 19 qui forme une échancrure dans la partie avant 1b du tapis 1 , cette découpe 19 délimitant une patte avant latérale 20 qui est destinée à venir s'appliquer sur une portion à plus grande déclivité que le reste de la partie avant , s'agissant notamment d'un passage de roue. Le second rebord 3 est sur tout le pourtour de la découpe 19 , comme illustré à la figure 1.

La présence d'un rebord en forme de U retourné sur toute la périphérie du tapis 1 permet de recueillir sur la face plane 4 dudit tapis tous les cailloux ou autres éléments indésirables qui peuvent être emportés par les chaussures de l'utilisateur lorsqu'il s'installe dans le véhicule, évitant en particulier que ces cailloux ou autres éléments ne pénètrent sous le tapis , dans la partie avant 1b, comme cela peut se produire avec le tapis du document EP.834.423. Ceci permet , lors du nettoyage de la voiture , de retirer le tapis 1 et d'évacuer les cailloux et autres éléments sans avoir la nécessité de nettoyer la moquette se trouvant en-dessous dudit tapis.

Par ailleurs grâce au fait que l'extrémité 12 de la branche extérieure 10 du second rebord 3 vient en appui sur la moquette préexistant sur toute la largeur de la partie avant du logement, on améliore la stabilité du tapis dans ledit logement, ladite extrémité 12 venant en prise sur la moquette et empêchant le déplacement du tapis vers l'avant.

Sur la figure 4, le tapis 1 est représenté à plat sur un plan continu DD', qui correspond à la face inférieure 4a de la partie plane 4. Lorsque le tapis 1 est posé dans le fond du logement, la partie avant 1b du tapis 1 remonte vers l'avant avec une certaine pente , ce qui provoque une certaine déformation du tapis dans la zone s'étendant entre les deux zones latérales 1c, correspondant à la zone de discontinuité du logement. Cette déformation se réalise de manière particulièrement aisée du fait qu'elle se produit au niveau du rebord intermédiaire 14, particulièrement à la jonction entre le rebord intermédiaire 14 et le second rebord 3. Dans un mode précis de réalisation , donné à titre d'exemple non exhaustif , la hauteur H1 du premier rebord 2 était de l'ordre de 25 à 30mm, la hauteur H2 du second rebord 3 était de l'ordre de 12 à 15 mm. La distance E s'étendant entre le plan DD' et l'extrémité libre de la branche extérieure 6 du premier rebord 2 était de l'ordre de 10mm. La largeur des rebords, premier, second et intermédiaire, était identique, prise entre les branches intérieure et extérieure.

La présente invention n'est pas limitée au mode de réalisation décrit ci-dessus à titre d'exemple non exhaustif. En particulier, le tapis peut être formé exclusivement d'une couche plastique thermoformée, sans revêtement textile.

## Revendications

1. Tapis de sol (1) accessoire pour automobile constitué d'une couche plastique, fixée éventuellement comme sous-couche sous un revêtement extérieur textile, possédant une structure préformée avec une partie plane (4) et sur toute sa périphérie un rebord relevé ayant une configuration en U retourné, **caractérisé en ce que** le rebord a une structure différenciée, selon son emplacement, entre deux types principaux, dénommés premier (2) et second (3) rebords, **en ce que** le premier rebord (2), disposé sur toute la périphérie sauf sur la partie avant (1b), a une hauteur , au-dessus du plan DD' de la face inférieure (4a) de la partie plane (4), ayant une valeur H1 déterminée, **en ce que** l'extrémité libre (8) de la branche extérieure (6) dudit premier rebord (2) est à une distance E dudit plan DD', **en ce que** le second rebord (3), disposé sur la partie avant (1b), a une hauteur , au-dessus du plan DD', ayant une valeur H2 inférieure à H1, **en ce que** l'extrémité libre (12) de la branche extérieure (10) dudit second rebord (3) est sensiblement dans le plan DD' et **en ce qu'**il comporte, entre le premier (2) et le second (3) rebords, deux rebords intermédiaires (14) dont la hauteur décroît progressivement de H1 à H2 et pour lequel la distance E décroît jusqu'à une valeur nulle.

2. Tapis selon la revendication 1 **caractérisé en ce que** H2 est inférieure à 0,5 H1.

3. Tapis selon la revendication 2 **caractérisé en ce que** H2 est comprise entre 0,2 et 0,3 H1.

4. Tapis de sol selon l'une des revendications 1 à 3 **caractérisé en ce que** E est de l'ordre de 0,25 à 0,5 H1.

5. Tapis de sol selon l'une des revendications 1 à 4 **caractérisé en ce que** H1 est de l'ordre de 25 à 30mm.

6. Tapis de sol selon la revendication 1 **caractérisé en ce que** les deux rebords intermédiaires (14) sont disposés dans une zone de pliage éventuel, résultant du placement du tapis dans un logement présentant une zone de discontinuité entre une partie plane et une partie inclinée.

7. Tapis selon la revendication 6 **caractérisé en ce que** les deux rebords sont décalés l'un de l'autre dans la direction longitudinale du tapis.

8. Tapis selon l'une des revendications 1 à 7 **caractérisé en ce que :**
- la partie avant (1b) comporte une découpe longitudinale (19) qui délimite une patte avant latérale (20),
- le second rebord (3) s'étend sur le contour délimité par la découpe longitudinale (19).

## Claims

1. A car floor-mat accessory (1) constituted by a layer of plastics material, optionally fastened as an underlayer beneath an outer textile covering, possessing a pre-formed structure with a plane portion (4), and over its entire periphery a raised margin having an upside-down U-shaped configuration, the mat being **characterized in that** the margin is of a structure that differs, depending on its location, between two main types referred to as a first margin (2) and a second margin (3), **in that** the first margin (2), located over the entire periphery except for the front portion (1b), presents a height above the plane DD' of the bottom face (4a) of the plane portion (4) having a determined value H1, **in that** the free end (8) of the outer flange (6) of said first margin (2) is at a distance E from said plane DD', **in that** the second margin (3) disposed over the front portion (1b) has a height above the plane DD' with a value H2 that is less than H1, **in that** the free end (12) of the outer flange (10) of said second margin (3) lies substantially in the plane DD', and **in that** it includes, between the first and second margins (2, 3), two intermediate margins (14) of height that decreases progressively from H1 to H2 and for which the distance E decreases to a value of zero.

2. A mat according to claim 1, **characterized in that** H2 is less than 0.5H1.

3. A mat according to claim 2, **characterized in that** H2 lies in the range 0.2H1 to 0.3H1.

4. A floor mat according to any one of claims 1 to 3, **characterized in that** E is about 0.25H1 to 0.5H1.

5. A floor mat according to any one of claims 1 to 4, **characterized in that** H1 is of the order of 25 mm to 30 mm.

6. A floor mat according to claim 1, **characterized in that** both intermediate margins (14) are located in a potential fold zone resulting from the mat being placed in a housing possessing a discontinuity between a plane portion and an inclined portion.

7. A mat according to claim 6, **characterized in that** the two margins are offset from each other in the longitudinal direction of the mat.

8. A mat according to any one of claims 1 to 7,
**characterized in that:**
• the front portion (1b) includes a longitudinal cutout (19) that defines a lateral front tab (20); and
• the second margin (3) extends over the outline defined by the longitudinal cutout (19).

## Patentansprüche

1. Bodenmatte (1), die ein Kraftfahrzeugzubehör ist, bestehend aus einer Kunststoffschicht, die eventuell als Unterlage unter einer äußeren Textilbeschichtung befestigt ist, die eine vorgeformte Struktur mit einem ebenen Teil (4) und auf ihrem Umfang einen angehobenen Rand aufweist, der eine Konfiguration eines umgekehrten U hat, **dadurch gekennzeichnet, daß** der Rand, je nach seiner Lage, eine unterschiedliche Struktur von zwei Haupttypen hat, die erster (2) und zweiter (3) Rand genannt werden, und daß der erste Rand (2), der auf der ganzen Peripherie außer auf dem vorderen Teil (1 b) angeordnet ist, eine Höhe oberhalb der Ebene DD' der Unterseite (4a) des ebenen Teils (4) hat, die einen bestimmten Wert H1 hat, daß das freie Ende (8) des äußeren Schenkels (6) des ersten Rands (2) in einer Entfernung E von der Ebene DD' liegt, daß der zweite Rand (3), der auf dem vorderen Teil (1 b) angeordnet ist, eine Höhe oberhalb der Ebene DD' hat, die einen Wert H2 kleiner als H1 hat, daß das freie Ende (12) des äußeren Schenkels (10) des zweiten Rands (3) im wesentlichen in der Ebene DD' liegt, und daß sie zwischen dem ersten (2) und dem zweiten (3) Rand zwei Zwischenränder (14) aufweist, deren Höhe allmählich von H1 zu H2 sinkt und für die die Entfernung E bis zu einem Wert gleich null abnimmt.

2. Matte nach Anspruch 1, **dadurch gekennzeichnet, daß** H2 kleiner als 0,5 H1 ist.

3. Matte nach Anspruch 2, **dadurch gekennzeichnet, daß** H2 zwischen 0,2 und 0,3 H1 liegt.

4. Bodenmatte nach einem der Ansprüche 1 bis 3, **dadurch gekennzeichnet, daß** E in der Größenordnung von 0,25 bis 0,5 H1 liegt.

5. Bodenmatte nach einem der Ansprüche 1 bis 4, **dadurch gekennzeichnet, daß** H1 in der Größenordnung von 25 bis 30 mm liegt.

6. Bodenmatte nach Anspruch 1, **dadurch gekennzeichnet, daß** die zwei Zwischenränder (14) in einer eventuellen Faltzone angeordnet sind, die sich aus der Plazierung der Matte in einer Aufnahme ergibt, die eine Unterbrechungszone zwischen einem ebenen Teil und einem geneigten Teil aufweist.

7. Matte nach Anspruch 6, **dadurch gekennzeichnet, daß** die zwei Ränder voneinander in der Längsrichtung der Matte versetzt sind.

8. Matte nach einem der Ansprüche 1 bis 7, **dadurch gekennzeichnet, daß:**
- der vordere Teil (1 b) einen Längsschnitt (19) aufweist, der eine vordere seitliche Lasche (20) abgrenzt,
- sich der zweite Rand (3) auf dem Umfang, der von dem Längsausschnitt (19) abgegrenzt wird, erstreckt.
